# EUROPEAN PATENT APPLICATION

(11) **EP 2 592 449 A2**
(43) Date of publication of application: **15.05.2013**
(21) Application number: 12191076.4
(22) Date of filing: 02.11.2012
(51) Int. Cl.: G02B 6/00

(54) **Backlight unit and display apparatus having the same**

(30) Priority: 09.11.2011 KR 20110116300
(71) Applicant: Samsung Electronics Co., Ltd, Gyeonggi-do 443-742 (KR)
(72) Inventor: Lee, Dae-hee, Gyeonggi-do (KR); Kim, Jae-young, Gyeonggi-do (KR); Kim, Wook-tae, Gyeonggi-do (KR); Noh, Jae-heon, Gyeonggi-do (KR); Jung, Myung-ryul, Gyeonggi-do (KR); Choi, Hyeong-sik, Gyeonggi-do (KR)
(74) Representative: Taor, Simon Edward William

(57) **Abstract**

A backlight unit of a display apparatus, the backlight unit includes a light source unit disposed on at least one edge of a display panel; and a light guide plate disposed at a rear of the display panel. The light guide plate includes a first pattern part including a plurality of first pattern lines formed on a lower surface of the light guide plate, and which extend perpendicularly to a transmission direction of the radiated light, and which totally reflect the radiated light to an upper surface of the light guide plate, and a second pattern part including a plurality of second pattern lines formed on the upper surface of the light guide plate, and which extend parallel with the transmission direction of the radiated light, and which guide light transmitted in the light guide plate to travel and exit along the second pattern lines.

## Description

Embodiments of the invention relate to a backlight unit which generates and provides light to a display panel so that images are displayed on the display panel, and a display apparatus having the same, and more particularly to a backlight unit which has a structure of improving efficiency of light provided to a display panel, and a display apparatus having the same.

A display apparatus is a device which includes a display panel displaying images to present broadcast signals or various formats of image signals/image data, and is configured as a TV, a monitor, or the like. The display panel is configured in various types, such as a liquid crystal display (LCD) panel, a plasma display panel (PDP), or the like, and is employed for various display apparatuses. Here, when an LCD panel that does not generate light by itself is employed as a display panel, a display apparatus includes a backlight unit which generates and provides light to the display panel.

A backlight unit of a display apparatus adopts, as a light source generating light, light emitting diodes (LEDs). The LEDs have excellent characteristics in view of environmental issues and response rate, as compared with a cold cathode fluorescent lamp conventionally used. A backlight unit may be classified into a direct type and an edge type based on position of a light source relative to a light guide plate.

In a direct-type backlight unit, light sources are disposed parallel with a rear side of a light guide plate and each transmit light directly to a front display panel. However, in an edge-type backlight unit, light sources are disposed in a bar shape along an edge of a light guide plate, and light from the light sources enters a lateral side of the light guide plate and then is transmitted to a display panel.

Accordingly, one or more exemplary embodiments provide a backlight unit of a display apparatus, the backlight unit including: a light source unit disposed on at least one edge of a display panel; and a light guide plate disposed at a rear of the display panel and configured to transmit light radiated from the light source unit to a rear side of the display panel, wherein the light guide plate includes a first pattern part comprising a plurality of first pattern lines formed on a lower surface of the light guide plate and which extend perpendicularly to a transmission direction of the radiated light from the light source unit, and which totally reflect the radiated light to an upper surface of the light guide plate, and a second pattern part comprising a plurality of second pattern lines formed on the upper surface of the light guide plate and which extend parallel with the transmission direction of the radiated light from the light source unit, and which guide light transmitted in the light guide plate to travel along and exit from the second pattern lines.

The first pattern lines may be engraved into the lower surface to have a cross section of a wedge shape or prism shape.

On the cross section of the first pattern lines, vertices of the plurality of first pattern lines, which face the upper surface of the light guide plate, may have an angle from 70 to 110 degrees.

A pitch distance between vertices of two neighboring first pattern lines may be less than 0.5 mm.

A main angle of light reflected by the plurality of first pattern lines and which exits from the light guide plate may be in a range from -10 to 10 degrees based on a normal axis with respect to the rear side of the display panel.

The first pattern lines formed on the lower surface of the light guide plate may be more densely distributed as distance from the light source unit increases.

The second pattern lines may be embossed in a lenticular shape on the upper surface of the light guide plate.

A single second pattern line of the plurality of second pattern lines may have a width of 100 µm or less and a ratio of height to width of 0.35 or higher.

The light source unit may include a plurality of light emitting elements sequentially disposed, and the second pattern lines are disposed corresponding to the plurality of light emitting elements, respectively, such that a corresponding one of the second pattern lines guides an exit of light radiated from a corresponding light emitting element among the plurality of light emitting elements.

The corresponding one of the plurality of second pattern lines may block light radiated from the plurality of light emitting elements other than the corresponding light emitting element from entering the corresponding one of the plurality of second pattern lines at a preset level or less.

The backlight unit may further include a diffusion sheet disposed between the display panel and the upper surface of the light guide plate and which scatters light exiting from the upper surface of the light guide plate.

The foregoing and/or other aspects may be achieved by providing a display apparatus including: a display panel; and the backlight unit which provides light to the display panel.

The above and/or other aspects will become apparent and more readily appreciated from the following description of the exemplary embodiments, taken in conjunction with the accompanying drawings, in which:
FIG. 1 is an exploded perspective view of a display apparatus according to an exemplary embodiment.
FIG. 2 is a perspective view illustrating a main part of a light guide plate of the display apparatus of FIG. 1.
FIG. 3 is a lateral cross-sectional view illustrating a form of light reflected by the first pattern part in the display apparatus of FIG. 1.
FIGS. 4A to 4D are graphs presenting distribution of an exiting angle of light detected on the entire surface of a display panel in a display apparatus having a comparative configuration to the display apparatus of FIG. 1.
FIGS. 5A and 5B are graphs illustrating distribution of an exiting angle of light detected on the entire surface of the display panel of the display apparatus of FIG. 1.
FIG. 6 is a lateral cross-sectional view illustrating a main part of a second pattern of the display apparatus of FIG. 1.
FIG. 7 is a plan view of the main part of the second pattern part illustrating light travelling in the second pattern part in the display apparatus of FIG. 1.
FIG. 8 is a plan view illustrating a light guiding efficiency test by the second pattern part in the display apparatus of FIG. 1.
FIG. 9 is a graph comparing guide efficiency results of the test of FIG. 8 with those of the comparative configuration.
FIG. 10 is a block diagram illustrating a configuration of the display apparatus of FIG. 1.

Below, exemplary embodiments will be described in detail with reference to accompanying drawings so as to be easily realized by a person having ordinary knowledge in the art. The exemplary embodiments may be embodied in various forms without being limited to the exemplary embodiments set forth herein. Descriptions of well-known parts are omitted for clarity and conciseness, and like reference numerals refer to like elements throughout.

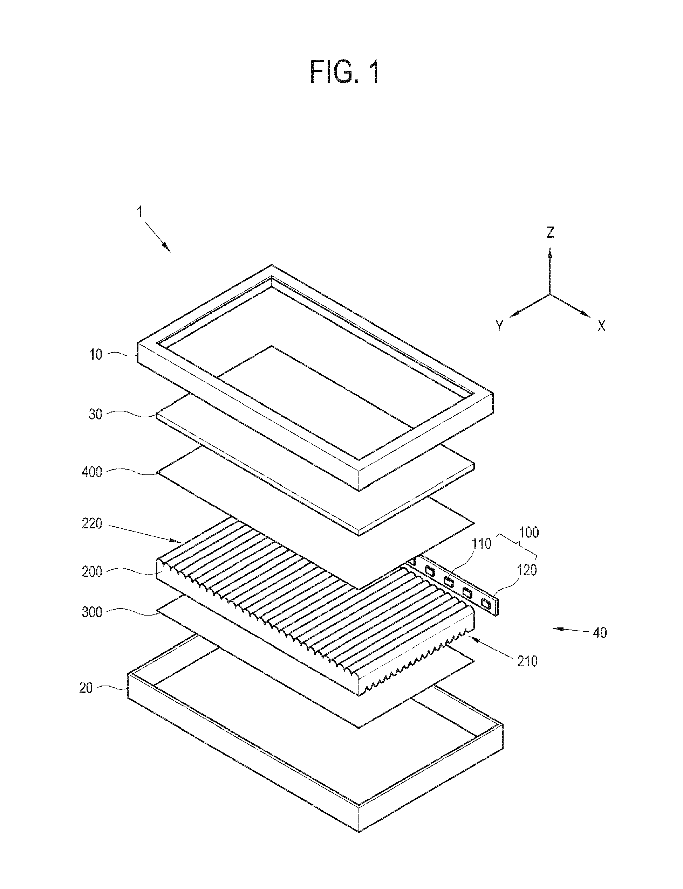

FIG. 1 is a schematic exploded perspective view of a display apparatus 1 according to an exemplary embodiment.

As shown in FIG. 1, the display apparatus 1 according to the present exemplary embodiment includes covers 10 and 20 which form an inside accommodation space, a display panel 30 which is accommodated in the accommodation space by the covers 10 and 20 and displays images on a surface thereof, and a backlight unit 40 which is accommodated in the accommodation space by the covers 10 and 20 and generates and provides light to the display panel 30 so that images are displayed on the display panel 30.

First, directions shown in FIG. 1 are defined as follows. Generally, X, Y, and Z directions of FIG. 1 indicate width, length, and height directions of the display panel 30, respectively. The display panel 30 is disposed on an X-Y plane, and the covers 10 and 20, the display panel 30 and the backlight unit 40 are stacked in a Z-axis. Hereinafter, the drawings including FIG. 1 and exemplary embodiments will be described on the basis of the foregoing definition of the directions. Here, opposite X, Y, and Z directions are expressed as -X, -Y, and -Z directions, respectively, and the X-Y plane means a plane defined by an X-axis and a Y-axis.

The covers 10 and 20 form an outward shape of the display apparatus 1 and support the display panel 30 and the backlight unit 40 which are accommodated inside. Defining the Z direction as a front direction/front side and the -Z direction as a rear direction/rear side based on the display panel 30 in FIG. 1, the covers 10 and 20 include a front cover 10 supporting a front side of the display panel 30 and a rear cover 20 supporting a rear side of the backlight unit 40.

The front cover 10 and the rear cover 20 form the accommodation space together, therebetween, and support edges of the display panel 30 and the backlight unit 40. In particular, the front cover 10 has an opening formed on a surface parallel with the X-Y plane to expose an image display area of the display panel 30.

In the present exemplary embodiment, the display panel 30 is configured as a liquid crystal display (LCD) panel. The display panel 30 is formed of two substrates (not shown) and a liquid crystal layer (not shown) interposed therebetween and displays images on a surface thereof by adjusting alignment of liquid crystals in the liquid crystal layer (not shown) through application of driving signals. The display panel 30 does not emit light by itself and thus is provided with light from the backlight unit 40 to display images in the image display area.

The display panel 30 includes a driving circuit board (not shown). When a driving signal is applied from the driving circuit board, the liquid crystals (not shown) of the display panel 30 rotate at a predetermined angle. Accordingly, light transmitting characteristics vary in the respective cells (not shown) constituting the image display area of the display panel 30, thereby displaying images in the image display area.

The backlight unit 40 is disposed at a rear of the display panel 30, that is, in the -Z direction of the display panel 30, to provide light to the display panel 30. The backlight unit 40 includes a light source unit 100 disposed on an edge of the display panel 30, a light guide plate 200 disposed parallel with the display panel 30 so as to face a rear side of the display panel 30, a reflection plate 300 disposed under the light guide plate 200 to face a lower side of the light guide plate 200, and a diffusion sheet 400 disposed between the display panel 30 and the light guide plate 200.

The light source unit 100 generates light and radiates the generated light to enter the light guide plate 200. The light source unit 100 is installed extending along an edge surface of the display panel 30, in the X-Y plane. The light source 160 is disposed along at least one of the edges of the display panel 30 or the light guide plate 200.

Although the light source unit 100 is installed along a side wall on an edge in the -Y side of the light guide plate 200 in the present exemplary embodiment, this is an illustrative example and the present exemplary embodiment is not limited thereto. The light source unit 100 may be installed along any one or more of the four edges of the light guide plate 200.

The light source unit 100 includes a plurality of light emitting elements 110 sequentially disposed in the X direction, which generate and radiate light, and a module board 120 on which the light emitting elements 110 are mounted to turn on/off.

The light emitting elements 110 radiate light in a direction parallel with the surface of the display panel 30, for example, in the -Y direction. In the present exemplary embodiment, the light emitting elements 110 are configured as light emitting diodes (LEDs) and are provided with driving power and on/off control signals from the module board 120 to turn on/off.

The light emitting elements 110 may include a blue LED, a green LED and a red LED. Blue light, green light and red light emitted from the respective colors of LEDs are mixed into white light having excellent color reproducibility. However, this is an illustrative example only, and the light emitting elements 110 may include white LEDs which themselves generate white light.

The plurality of light emitting elements 110 are mounted on a surface of the module board 120 facing the Y direction. The module board 120 includes wiring (not shown) to provide power from system power of the display apparatus 1 to the mounted light emitting elements 110. The wiring is capable of realizing local dimming in that power is transmitted to each light emitting element 110, thereby selectively controlling turning on/off of the respective light emitting elements 110.

The light guide plate 200, which is a plastic lens including acrylic materials, uniformly transmits light incident from the light source unit 100 to the entire image display area of the display panel 30. An upper surface of the light guide plate 200 that is a side in the Z direction faces the display panel 30, and a lower surface 201 thereof that is a side in the -Z direction faces the reflection plate 300. Among four side walls in four directions of the light guide plate 200 formed between the upper surface and the lower surface, a side wall in the -Y direction faces the light emitting elements 110. Light radiated from the light emitting elements 110 enters the side wall in the -Y direction. The light guide plate 200 of the present exemplary embodiment includes a first pattern part 210 formed on the lower surface of the light guide plate 200. The first pattern part 210 totally reflects light radiated from the light source unit 100 and transmits the light in the light guide plate 200 toward the upper surface of the light guide plate 200. The light guide plate 200 further includes a second pattern part 220 formed on the upper surface. The second pattern part 220 guides the light transmitted in the light guide plate 200 to an exit. The first pattern part 210 and the second pattern 220 will be described in detail.

The reflection plate 300, under the light guide plate 200, reflects light exiting from an inside of the light guide plate 200 to the outside so that the light heads back toward the light guide plate 200. To this end, a surface of the reflection plate 300 has total reflection characteristics.

The diffusion sheet 400 is disposed between the display panel and the light guide plate 200, parallel with the display panel 30. The diffusion sheet 400 scatters and diffuses light exiting from the light guide plate 200 and transmits uniform light to the display panel 30.

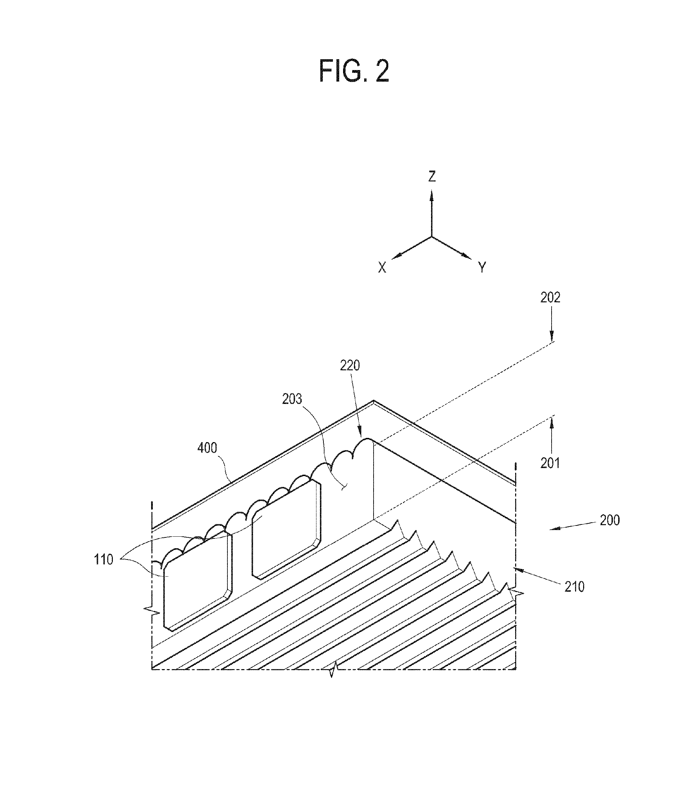

Hereinafter, a configuration of the light guide plate 200 according to the present exemplary embodiment is described with reference to FIG. 2. FIG. 2 is a perspective view of a main part of the light guide plate 200, showing the light emitting elements 110 of the light source unit 100 only to clarify the present exemplary embodiment.

As shown in FIG. 2, the light guide plate 200 has a planar shape, e.g. of a rectangular plate. The light guide plate 200 includes the upper surface 202 that is the side facing in the Z direction, facing the display panel 30 or the diffusion sheet 400, the lower surface 201 that is the side facing in the -Z direction which is an opposite direction of the upper surface 202, and a side wall 203 that is a side facing in the -Y direction, perpendicular to the upper surface 202 and the lower surface 201.

Light radiated from the light emitting elements 110 enters the side wall 203 and is transmitted in the light guide plate 200. When light transmitted in the light guide plate 200 reaches the lower surface 201, the light is reflected by the first pattern part 210 formed on the lower surface 201 and heads toward the upper surface 202. Further, light reaching the upper surface 202 exits to the diffusion sheet 400 through the second pattern part 220.

When light radiated from the light emitting elements 110 reaches the display panel 30, light efficiency is the best when an angle of light exiting from the light guide plate 200 is parallel with a normal axis with respect to the surface of the display panel 30, i.e., a Z-axis in FIG. 2. That is, when a main angle of light exiting from the light guide plate 200 is 90 degrees to the surface of the display panel 30, maximum light efficiency is obtained.

However, if the entire light enters the surface of the display panel 30 at 90 degrees, uniformization of overall brightness across the display panel 30 may not be favorable in view of functions of the diffusion sheet 400 scattering and diffusing light. In this respect, a main angle of light exiting from the light guide plate 200 is set to be in a range from -10 degrees to 10 degrees based on the normal axis with respect to the surface of the display panel 30.

The first pattern part 210 and the second pattern part 220 are provided to form such main angle of light, which is described below.

The first pattern part 210 includes a plurality of first pattern lines 210 formed on the lower surface 201 and which extend perpendicularly to a traveling direction of light radiated from the light emitting elements 110. That is, as radiated light travels in the Y direction in FIG. 2, each first pattern line 210 extends in the X direction, and the plurality of first pattern lines 210 are sequentially disposed in the Y direction. The light guide plate has a substantially planar lower surface between the grooves of the first pattern lines.

A cross section of the first pattern lines 210 has a wedge, triangular or prism shape. Here, a cross section is obtained by cutting the first pattern lines 210 in a radius direction to a lengthwise axis of the first pattern lines 210, that is, by cutting parallel with a Y-Z plane.

The cross section of the removed or absent material forming the first pattern lines can have a uniform triangular cross-section, i.e. forming a triangular prism. The surfaces defining the first pattern lines can be planar. In the present exemplary embodiment, the cross section of the first pattern lines 210 has a shape of an isosceles triangle, but the three sides may be different in length.

The first pattern lines 210 are engraved into the lower surface 201, with vertices of the wedge-shaped cross section facing the display panel 30. Here, the first pattern lines 210 are provided to totally reflect light transmitted in the light guide plate 200. To this end, the pattern lines 210 may be subjected to mirror-like surface treatment. In some aspects, the pattern lines are coated with one or more coatings to reflect light.

The first pattern lines 210 totally reflecting light may be realized by various methods, without being particularly limited. For example, the first pattern lines 210 may be formed by designing a mold or the like when the light guide plate 200 is manufactured by an injection molding process. Thus, the light guide plate 200 is formed with a shape including the first pattern lines 210. Alternatively, the first pattern lines can be engraved into the lower surface.

Comparing with the present exemplary embodiment, in a backlight unit of the related art, a light reflecting pattern is formed on a light guide plate by burning a lower surface of the light guide plate with a laser or printing a pattern on the lower surface. However, since the related art light reflecting pattern involves a scratch due to manufacturing characteristics, it scatters light. In some aspects, the first pattern lines are arranged to reflect the light, without scattering in various directions, or forming an irregular reflection pattern. The engraved structure of the first pattern lines of the present invention can substantially prevent scattering, e.g. by the configuration and/or dimensions of the first pattern lines.

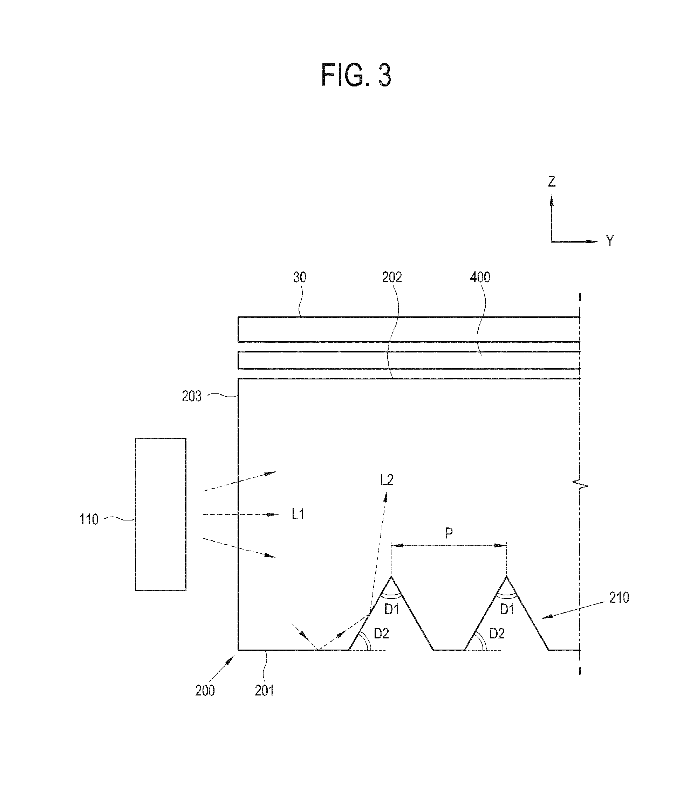

Thus, the first pattern lines 210 according to the present exemplary embodiment may improve light efficiency as compared with the conventional pattern.
Hereinafter, a configuration of the first pattern unit 210 will be described in detail. FIG. 3 is a lateral cross-sectional view illustrating a form of light reflected by the first pattern part 210.

As shown in FIG. 3, light radiated from the light emitting elements 110 enters the side wall 203 of the light guide plate 200 (L1). The radiated light (L1) is transmitted inside the light guide plate 200 in the Y direction and reflected by the first pattern lines 210 formed on the lower surface 201 to head toward the upper surface 202 (L2).

From the cross section of the first pattern lines 210, a vertex facing the upper surface 202 has an angle (D1) set to be from 70 to 110 degrees, and thus a base angle (D2) of the cross section is set to be from 35 to 80 degrees. Accordingly, a main angle of the reflected light (L2) may be in a range from -10 to 10 degrees based on the Z-axis.

If the angle (D₁) is less than 70 degrees or greater than 110 degrees, the angle of the reflected light (L2)may be out of the range from -10 to 10 degrees based on the Z-axis. Then, light efficiency may deteriorate.

In particular, if the angle (D1) is less than 70 degrees, the angle exceeds a light reflection critical angle, and thus the radiated light (L1) may not be reflected by the first pattern lines 210 but may instead penetrate the first pattern lines 210. In some aspects, the first pattern lines are configured to totally internally reflect at least some light from the light emitting elements.

Meanwhile, a pitch distance between two neighboring first pattern lines 210, that is, a spacing distance between vertices of two neighboring first pattern lines 210 (P), is set to be less than 0.5 mm.

The first pattern lines 210 on the lower surface 201 is more densely distributed as distance from the light emitting elements 110 increases, and thus the distance (P) may change depending on distance of the first pattern lines 210 from the light emitting elements. However, the distance (P) is set to be narrower within a range of less than 0.5 mm as distance from the light emitting elements 110 increases. Accordingly, the display panel 30 may have an overall uniform brightness.

In some aspects, the first pattern lines are dimensioned and/or spaced in a predetermined arrangement. For example, the first pattern lines have a spacing which decreases with an increasing distance from the light emitting elements 110. The first pattern lines are only present at the ordered and parallel spacings. In some aspects, each first pattern line can have the same orientation and/or dimensions. Alternatively, the spacing can be constant.

The reflected light (L2) by the first pattern lines 210 exits from the upper surface 202 at a main angle in a preset range as above, is diffused by the diffusion sheet 400 and is transmitted to the display panel 30.

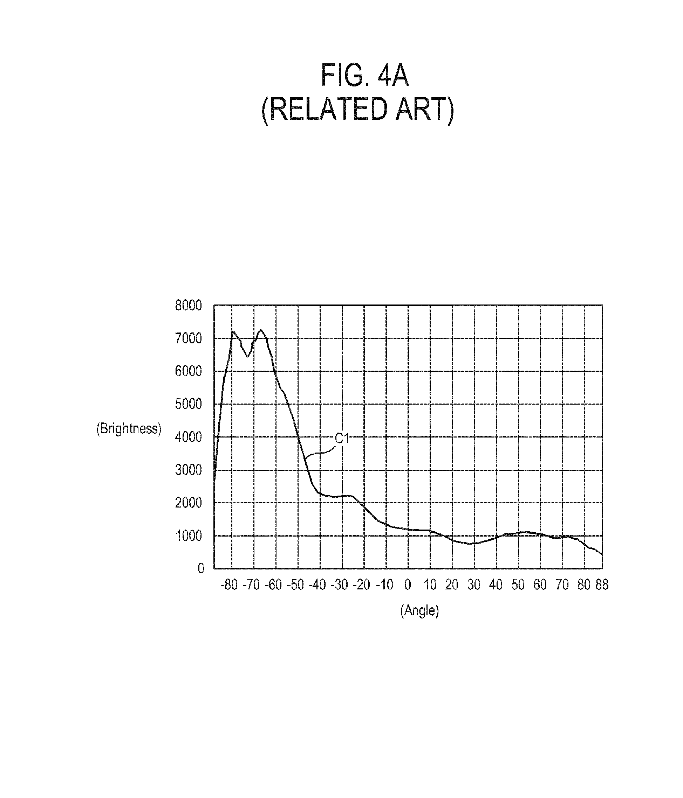

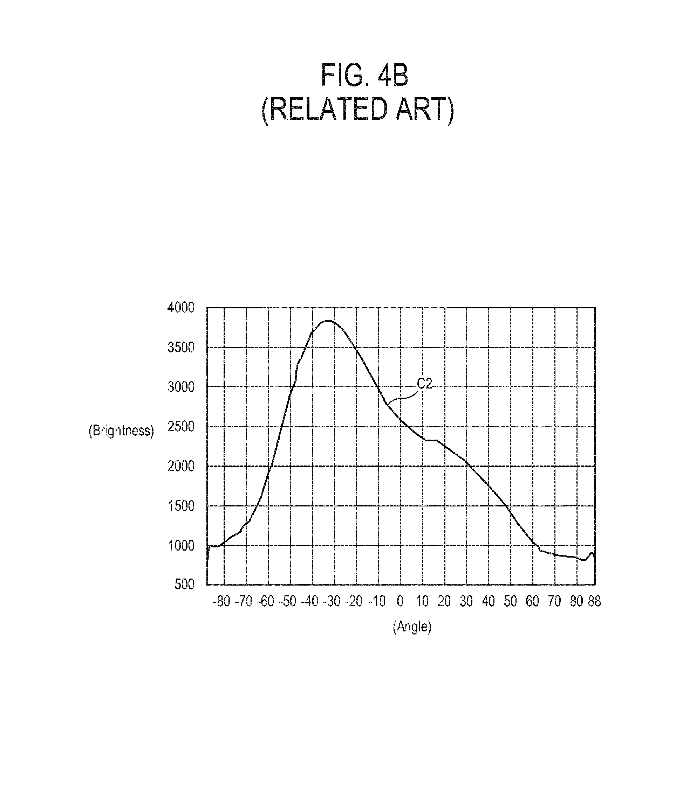

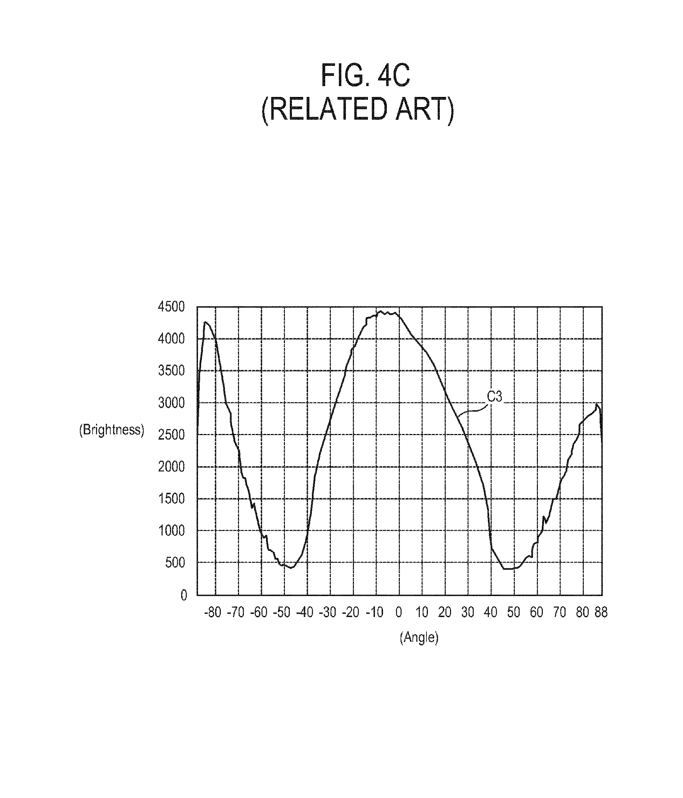

Hereinafter, experimental results obtained from comparison of light efficiency by the backlight unit 40 having a configuration according to the present exemplary embodiment with that of a preset comparative configuration are described with reference to FIGS. 4A to 4D.

FIGS. 4A to 4D illustrate graphs presenting distribution of an exiting angle of light detected on the entire surface of a display panel in a display apparatus employing a backlight unit having a comparative configuration to the present exemplary embodiment.

Here, the backlight unit with the comparative configuration has a structure as follows:
1. A light source unit has equivalent light emitting performance to that of the present exemplary embodiment,
2. An optical pattern of a light guide plate is a scattering pattern formed by a laser or a printing process,
3. Optical sheets between the light guide plate and the display panel selectively include up to three sheets of a diffusion sheet, a prism sheet and a protection film.

The graphs of 4A to 4D show distribution of an angle of traveling light detected on the entire surface of the display panel in the comparative display apparatus. That is, each curve of the graphs illustrates an angle at which light exiting from the display panel travels or exits under corresponding conditions, that is, how wide main angle of the light exiting from the display panel is.

On the graphs, a horizontal axis denotes an angle and a vertical axis denotes brightness. The angle on the horizontal axis refers to an angle based on the normal axis with respect to the surface of the display panel, and light efficiency is considered good as the angle approaches o. Further, (+) and (-) of the angle indicate directions.

It should be noted that measured data necessary to make the graphs are not indicated herein since the shapes of curves on the graphs are meaningful for comparison. Such definition of the graphs is applied to all of the graphs.

The graphs of FIGS. 4A to 4D present curves C₁ to C4, respectively.

At each curve, the backlight unit has a configuration listed in the following Table 1.

**<Table 1>**

| | Light guide plate | Diffusion sheet | Prism sheet | Protection film |
|---|---|---|---|---|
| C1 | O | X | X | X |
| C2 | O | O | X | X |
| C3 | O | O | O | X |
| C4 | O | O | O | O |

That is, curve C₁ is obtained by measuring an exiting angle of light when the backlight unit employs a light guide plate only but does not include any optical sheet. Curve C₄, on the other hand, is obtained by measuring an exiting angle of light when the backlight unit employs a light guide plate, a diffusion sheet, a prism sheet and a protective film.

On curve C₁, the main angle of light is 80 degrees, and thus light efficiency is low. On curve C₂, the main angle of light is 50 degrees, and thus light efficiency is more improved than curve C₁ as a diffusion sheet is employed.

On curve C₃, distribution of an exiting angle of light is the highest in regions of 0 and 80 degrees, and thus light efficiency is low. On curve C₄ under the condition that a protection film is further employed, distribution of an exiting angle of light is high at o degrees, and thus the main angle of light is regarded as o degrees.

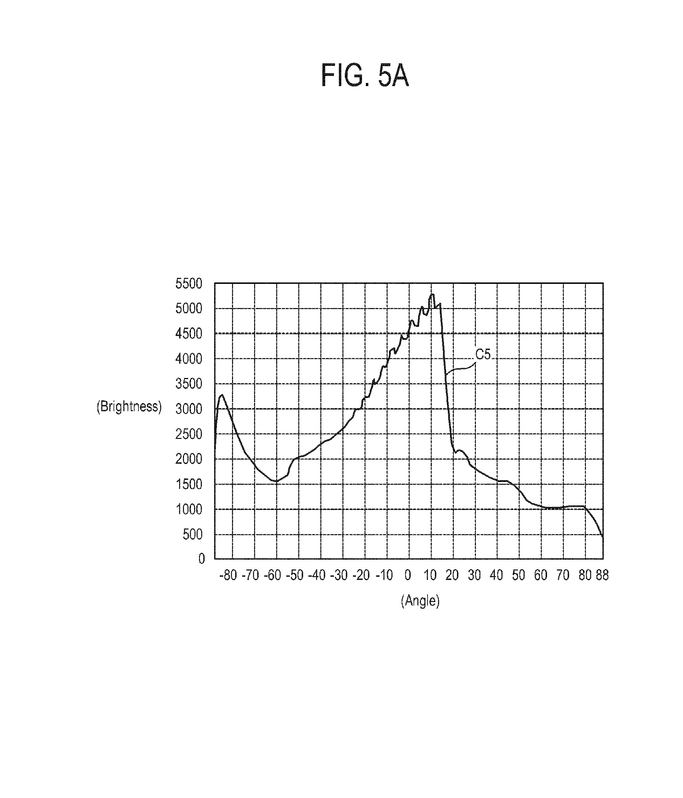

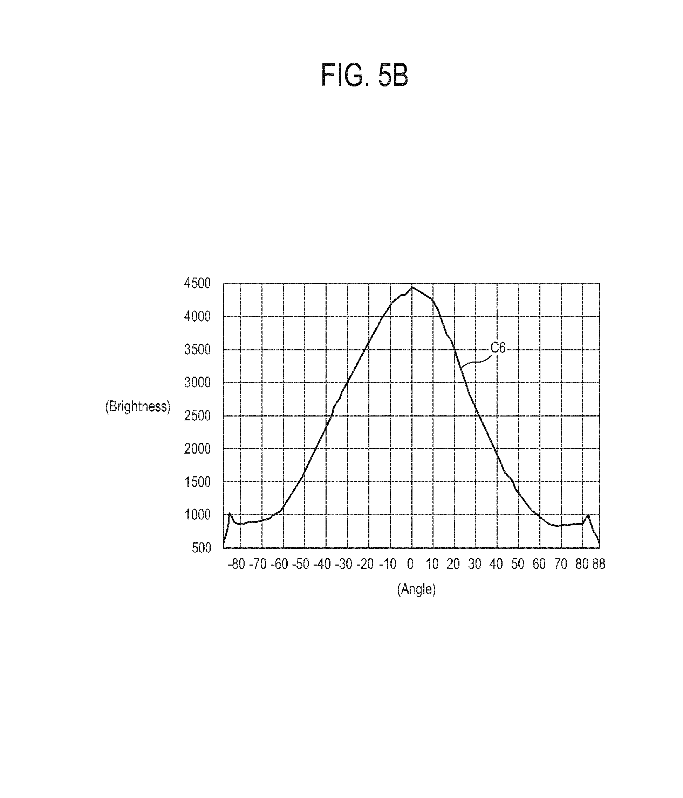

The graphs of FIGS. ₄A to ₄D analyze the main angle of exiting light regarding the comparative configuration. Hereinafter, analysis results of a main angle of exiting light regarding the backlight unit 40 according to the present exemplary embodiment are described with reference to FIGS. 5A and 5B. FIGS. 5A and 5B illustrate graphs presenting distribution of an exiting angle of light detected on the entire surface of the display panel 30 in the display apparatus 1 employing the backlight unit 40 according to the present exemplary embodiment.

The graphs of FIGS. 5A to 5B present curves C5 and C6, respectively.

At each curve, the backlight unit 40 has a configuration listed in the following Table 2.

**<Table 2>**

| | Light guide plate | Diffusion sheet |
|---|---|---|
| C5 | O | X |
| C6 | O | O |

On curve C5, distribution of an exiting angle of light is highest in a range from -10 to 10 degrees, and thus light efficiency is considered excellent. However, since the distribution of the exiting angle around o degrees is not symmetric, but varies, local variations in overall brightness distribution of the display panel 30 may occur.

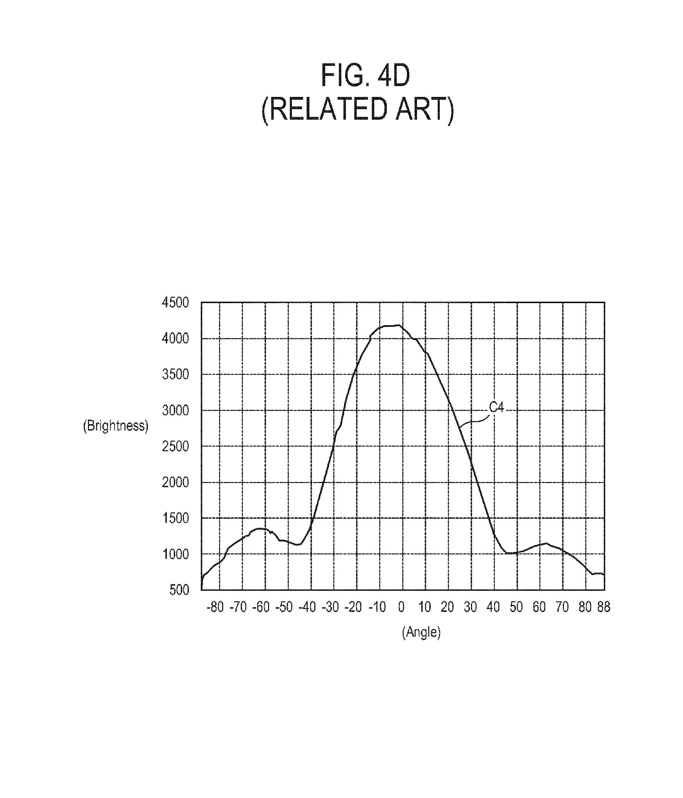

On curve C5 under the condition that the diffusion sheet 400 is further employed, the main angle of light is o degrees and light efficiency is improved as compared with the configuration having a relatively complicated structure corresponding to C4 of FIG. 4D.

As described above, the light guide plate 200 and the backlight unit 40 according to the present exemplary embodiment improve light efficiency with a simple structure as compared with the comparative configuration.

Further, in the comparative configuration corresponding to curve C4 of FIG. 4D, the display panel has a center brightness of 5430 nits, an average brightness 4670 nits, and a uniformity of 82%. Here, "nits" is a unit of brightness, and 1 nits denotes 1 candela per square meter (cd/m2).

However, in the configuration corresponding to curve C6 according to the present exemplary embodiment, the display panel 30 has a center brightness of 5970 nits, an average brightness 5130 nits, and a uniformity of 82%, wherein uniformity is almost the same as the comparative configuration but center brightness and average brightness increase by 10%, resulting in improvement in light efficiency, as compared with the comparative configuration.

Therefore, according to the present exemplary embodiment, efficiency of light provided to the display panel 30 may be improved.

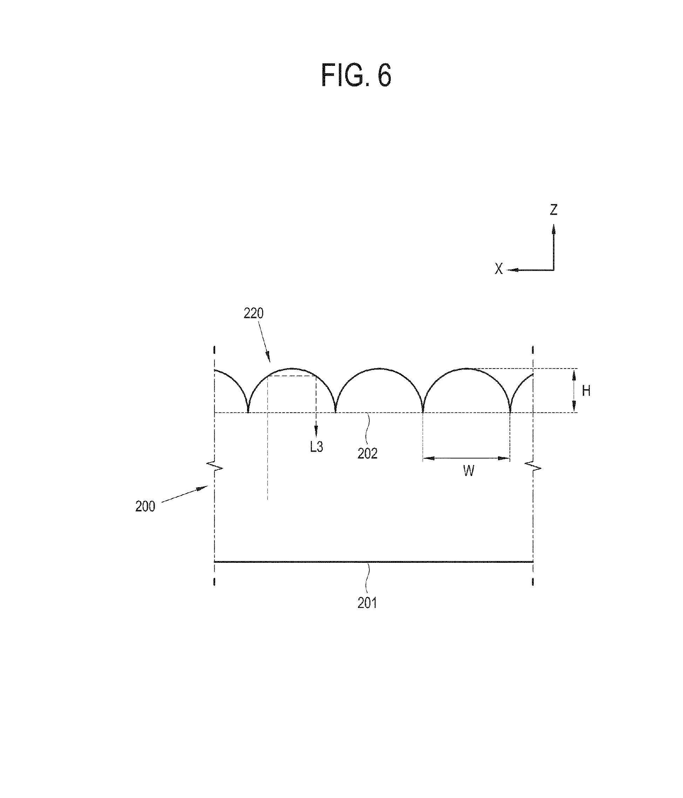

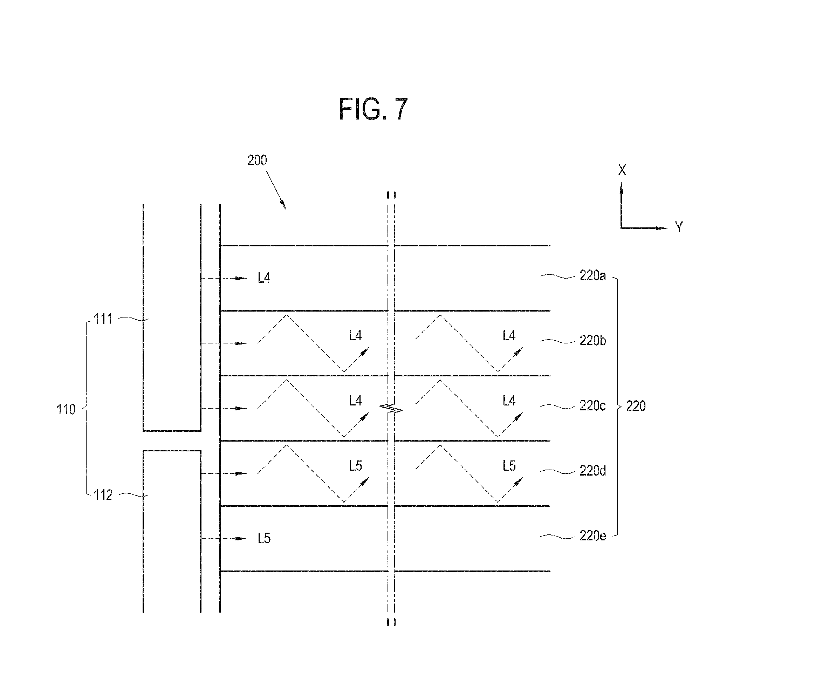

Hereinafter, the second pattern part 220 is described with reference to FIGS. 6 and 7. FIG. 6 is a lateral cross-sectional view of a main part of the second pattern part 220, and FIG.7 is a plan view of the main part of the second pattern part 220 illustrating light travelling in the second pattern part 220.

As shown in FIG. 6, a plurality of second pattern lines 220 are have a lenticular shape on the upper surface 202 of the light guide plate 200. The second pattern lines 220 can be embossed in a lenticular shape. Each second pattern line 220 extends parallel with a light radiating direction from the light emitting elements 110. A cross section of each second pattern line 220 formed by cutting across the second pattern line 220 in a radius direction with respect to an extending direction, that is, by cutting along the X-Z plane in FIG. 6, has a round shape projecting from the upper surface. The second pattern lines have a uniform cross-section in a direction extending from the light emitting elements, i.e. in the Y-direction. The cross-section of each line of the second pattern line is rounded, for example, approximately semi-circular.

A width of the cross section of the second pattern line 220 (W) is 100 µm or less. Further, a ratio of height (H) to width (W) of a single second pattern line 220, that is, an aspect ratio (H/W) is set to be 0.35 or higher.

When light exiting to the upper surface 202 is in a range from -10 to 10 degrees based on the Z-axis, favorable light efficiency is obtained. However, light traveling parallel with the Z-axis (L₃), that is, light traveling at an angle of 0 degrees based on the Z-axis, is not favorable for uniformization of overall brightness of the display panel 30 as described above.

Thus, the second pattern lines 220 reflect the light (L₃) back toward the lower surface 201, thereby contributing uniformization of brightness.

As shown in FIG.₇, the second pattern lines 220 include a first line 220a, a second line 220b, a third line 220c, a fourth line 220d, and a fifth line 220e, which are sequentially disposed in a row in the -X direction.

The light emitting elements 110 include a first light emitting element 111 and a second light emitting element 112, which are sequentially disposed in the -X direction.

Here, since the first line 220a, the second line 220b and the third line 220c are disposed corresponding to the first light emitting element 111, light radiating from the first light emitting element 111 to the light guide plate 200 (L₄) enters the first line 220a, the second line 220b and the third line 220c. As the first line 220a, the second line 220b and the third line 220c extend in the Y direction, the first line 220a, the second line 220b and the third line 220c guide the light (L₄) in the Y direction to travel along the corresponding lines 220a, 220b and 220c, and allow exit of light (L₄) from the corresponding lines 220a, 220b and 220c.

In the same manner, the fourth line 220d and the fifth line 220e correspond to the second light emitting element 112 and guide light radiated from the second light emitting element 112 (L₅).

Here, the third line 220c corresponding to the first light emitting element 111 and the fourth line 220d corresponding to the second light emitting element 112 are disposed adjacently to each other. The third line 220c may block the light radiated from the second light emitting element 112 (L₅) from entering at a preset level or more, and the fourth line 220d may block the light radiated from the first light emitting element 111 (L₄) from entering at a preset level or more.

That is, the respective second pattern lines 220 guide the traveling and exiting of light radiated from the corresponding (aligned) light emitting elements 110 and at the same time limit or block light radiated from non-corresponding (non-aligned) light emitting elements 110 to be at a preset level or less. Here, the preset level is changed or selected depending on configurations of the display apparatus 1, and thus is not limited to a particular level.

The structure described above enables the display apparatus 1 to realize local dimming by lines or regions.

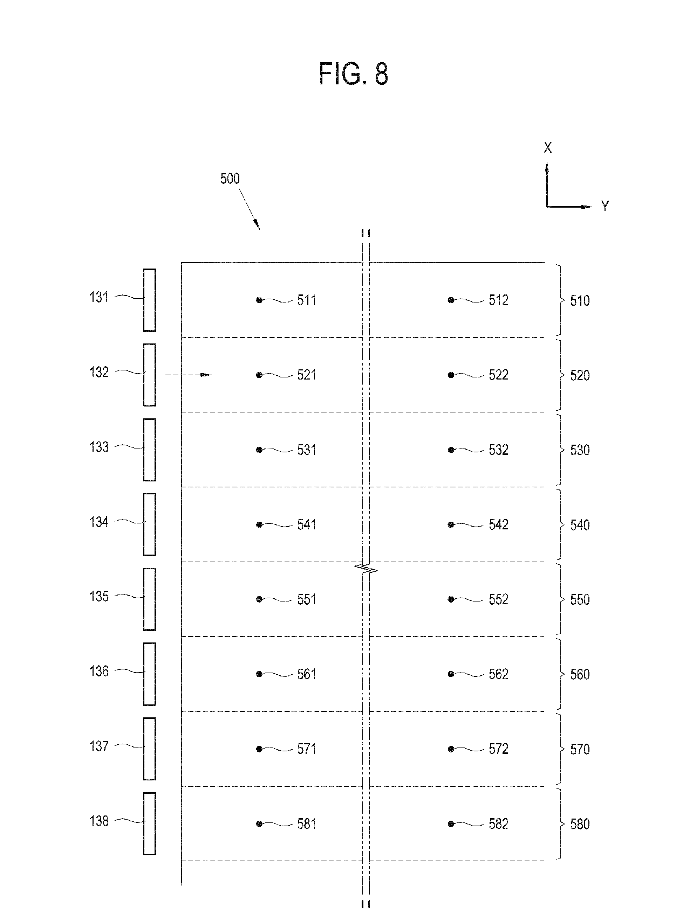

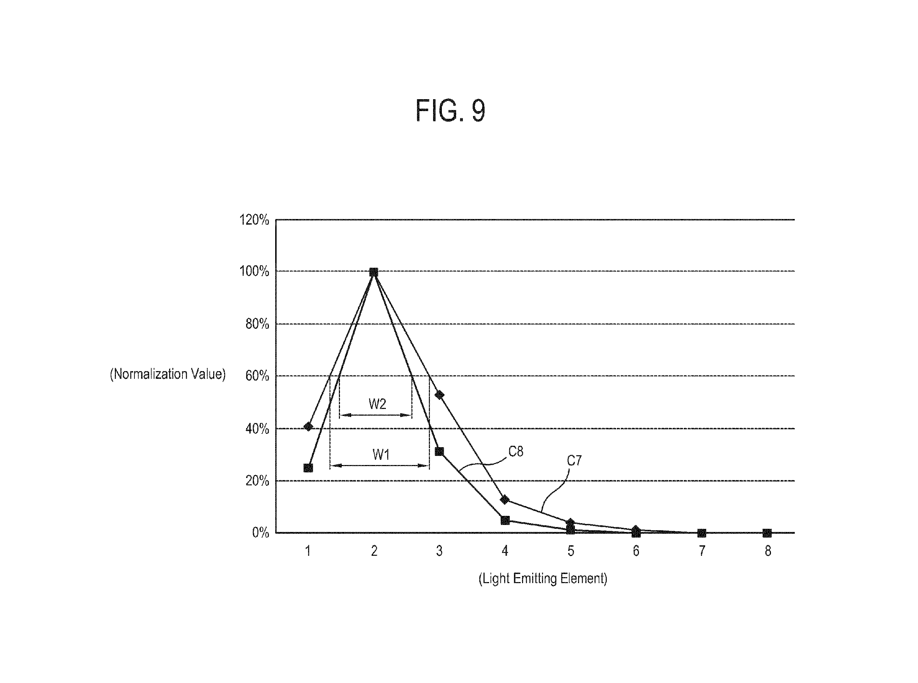

Hereinafter, experimental results supporting the structure are described with reference to FIGS. 8 and 9. FIG. 8 is a plan view illustrating a light guiding efficiency test by the second pattern part 220 according to the present exemplary embodiment, and FIG. 9 is a graph comparing guide efficiency results of the test according to FIG. 8 with those of comparative configurations.

As shown in FIG. 8, eight light emitting elements 131, 132, 133, 134, 135, 136, 137 and 138 are sequentially arranged along a side wall of a light guide plate 500 according to the present exemplary embodiment. The light guide plate 500 includes a plurality of regions 510, 520, 530, 540, 550, 560, 570, and 580 corresponding to the respective light emitting elements 131, 132, 133, 134, 135, 136, 137 and 138, and the respective regions 510, 520, 530, 540, 550, 560, 570, and 580 include a plurality of second pattern lines 220 (not shown) extending in the Y direction.

The respective regions 510, 520, 530, 540, 550, 560, 570, and 580 include an entering region which light radiated from the corresponding light emitting elements 131,132_{,} 133, 134, 135, 136, 137 and 138 enters and a central region spaced away from the entering region at a preset distance in the Y direction.

In this test, only a second light emitting element 132 is turned on to emit light among the light emitting elements 131, 132, 133, 134, 135, 136, 137 and 138 and the other light emitting elements 131, 133, 134, 135, 136, 137 and 138 are turned off. In this state, brightness of light exiting from spots 511, 521, 531, 541, 551, 561, 571 and 581 of the respective entering regions and spots 521, 522, 532, 542, 552, 562, 572 and 582 of the respective central regions is measured.

To compare with the present exemplary embodiment, results of measurement of brightness in a comparative configuration with a light guide plate not having the second pattern lines 220 are shown in Table 3.

**<Table 3>**

| | | Measured value (nits) | | Normalization (%) | |
|---|---|---|---|---|---|
| Light emitting element No. | State of light emitting element | Entering region | Central region | Entering region | Central region |
| 1 | off | 342 | 417 | 11 | 41 |
| 2 | on | 3070 | 1020 | 100 | 100 |
| 3 | off | 276 | 540 | 9 | 53 |
| 4 | off | 88 | 128 | 3 | 13 |
| 5 | off | 30 | 35 | 1 | 3 |
| 6 | off | 12 | 13 | 0 | 1 |
| 7 | off | 8 | 6 | 0 | 1 |
| 8 | off | 4 | 3 | 0 | 0 |

A unit of measured values is nits, and a unit of normalization is %.

A number of a light emitting element and the spots of the entering regions and the central regions are defined as in FIG. 8. That is, in the case of a light emitting element with a number of 2, relating to light emitting element 132 in FIG. 8, the entering region corresponds to a spot 521 and the central region corresponds to a spot 522. Here, as distinguished from the present exemplary embodiment, the comparative configuration does not include the second pattern lines 220.

Normalization is calculated as follows.

In the case of the entering region of light emitting element No. 1, since only light emitting element No. 2 132 emits light, normalization is obtained by [(measured value of entering region of light emitting element No. 1)/(measured value of entering region of light emitting element No. 2)]*100 (%). That is, normalization is calculated into about 11% by [(342/3070)*100].

In the same manner, in the case of the central region of light emitting element No. 5, normalization is obtained by [(measured value of central region of light emitting element No. 5)/(measured value of central region of light emitting element No. 2)]*100 (%). That is, normalization is calculated into about 3% by [(35/1020)*100].

Referring to normalization results of light emitting element No. 5 135 in Table 3 to compare contrast, the entering region has 1% and the central region has 3%. A relatively higher normalization value in the central region means that light radiated from light emitting element No. 2 132 is diffused to spread to a region corresponding to light emitting element No. 5 135.

Meanwhile, results of measurement of brightness in the light guide plate 500 including the second pattern lines 220 according to the present exemplary embodiment are illustrated in Table 4. The results in Table 4 are calculated in the same manner as in **Table 3.**

**<Table 4>**

| Light emitting element No. | State of light emitting element | Measured value (nits) | | Normalization (%) | |
|---|---|---|---|---|---|
| | | Entering region | Central region | Entering region | Central region |
| 1 | off | 420 | 314 | 10 | 25 |
| 2 | on | 4400 | 1250 | 100 | 100 |
| 3 | off | 360 | 395 | 8 | 32 |
| 4 | off | 92 | 58 | 2 | 5 |
| 5 | off | 32 | 15 | 1 | 1 |
| 6 | off | 12 | 5 | 0 | 0 |
| 7 | off | 5 | 2 | 0 | 0 |
| 8 | off | 3 | 2 | 0 | 0 |

Referring to normalization results of light emitting element No. 5 135 in Table 4 to compare contrast, the entering region 551 has 1 % and the central region 552 has 1 %, which means that light radiated from light emitting element No. 2 132 hardly or imperceptibly spreads to the region 550 corresponding to light emitting element No. 5 135. Comparing with the comparative configuration above, a normalization value in the central region 552 is improved from 3% to 1 % depending on presence of the second pattern lines 220. Thus, the second pattern lines improve the selection of a particular area to radiate light, reducing light radiated from neighbouring regions. The second pattern lines are configured such that light is radiated primarily by one or more aligned light emitting elements, i.e. substantially all light is radiated from the aligned light emitting elements.

FIG. 9 is a graph illustrating distribution of normalization values of the respective central regions in Tables 3 and 4.

On the graph of FIG. 9, a horizontal axis denotes a number of each light emitting element, and a vertical axis denotes a normalization value. Curve C₇ indicates normalization values of the central regions of the comparative configuration in Table ₃, and curve C8 indicates normalization values of the central regions of the present exemplary embodiment in Table ₄.

Based on light emitting element No. 2 132 radiating light, a narrower width of each curve indicates excellent light guiding efficiency or light straightness. Comparing a width of curve C₇ W₁ with a width of curve C8 W₂, W1>W2. Thus, when the second pattern lines 220 are employed as in the present exemplary embodiment, excellent light straightness is obtained.

In summary, the second pattern lines formed in a first region of the light guide plate guide light radiated from a light emitting element corresponding to the first region to travel along and exit from a corresponding second pattern line, and block the light radiated from the corresponding light emitting element from spreading to another region other than the first region or block light radiated from another light emitting element corresponding to another region from entering at a preset level.

Accordingly, the present exemplary embodiment conveniently enables local dimming by lines or regions in the display panel 30.

As described above, the light guide plate 200 of the backlight unit 40 according to the present exemplary embodiment includes the plurality of first pattern lines 210 formed on the lower surface 201, extending perpendicularly to the light radiating direction from the light emitting elements 110, and totally reflecting radiated light to the upper surface 202; and the plurality of second pattern lines 220 formed on the upper surface 202, extending parallel with the light radiating direction, and guiding traveling and allowing exit of radiated light.

Accordingly, efficiency of light provided to the display panel 30 may be improved, and local dimming is facilitated. In some aspects, only some of the light emitting elements emit light at any time i.e. are independently operable.

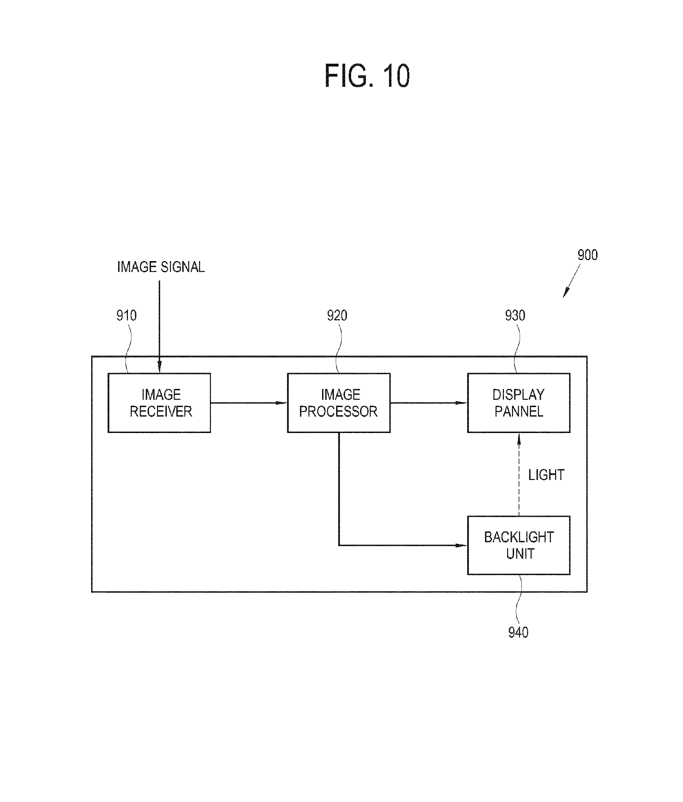

The above described exemplary embodiments may be applied to a display apparatus 900 configured in various types. Hereinafter, when the display apparatus 900 is configured as a TV, an example employing the exemplary embodiments is described with reference to FIG. 10. FIG. 10 is a block diagram illustrating a configuration of the display apparatus 900 according to a third exemplary embodiment. In FIG. 10, a solid line indicates transmission of an image signal or control signal, and a dotted line indicates transmission of light.

As shown in FIG. 10, the display apparatus 900 according to the present exemplary embodiment includes an image receiver 910 which receives image signals from the outside, an image processor 920 which processes image signals received by the image receiver 910, a display panel 930 which displayes images based on image signals processed by the image processor 920, and a backlight unit 940 which provides light so that images are displayed on the display panel 930.

The image receiver 910 receives image signals/image data through a wire or wirelessly and transmits the image signals/image data to the image processor 920. The image receiver 910 may be configured as various types corresponding to standards of received image signals. For example, the image receiver 910 may receive radio frequency (RF) signals or image signals according to composite/component video, super video, SCART, and high definition multimedia interface (HDMI), DisplayPort, unified display interface (UDI), or wireless HD standards.

The image processor 920 performs various preset image processing processes on image signals and outputs the processed image signals to the display panel 930, so that images are displayed on an image display side of the display panel 930. The image processor 920 may perform various processes, without being particularly limited, for example, decoding corresponding to various image formats, de-interlacing, frame refresh rate conversion, scaling, noise reduction to improve image quality, detail enhancement, and the like.

The image receiver 910 and the image processor 920 may be configured as image processing boards (not shown) embedded in the display apparatus 900.

The display panel 930 and the backlight unit 940 have substantially the same configurations as those in the foregoing exemplary embodiments, and thus descriptions thereof are omitted.

Although a few exemplary embodiments have been shown and described, it will be appreciated by those skilled in the art that changes may be made in these exemplary embodiments without departing from the principles of the invention, the scope of which is defined in the appended claims.

## Claims

1. A backlight unit of a display apparatus, the backlight unit comprising:
a light source unit disposed on at least one edge of a display panel; and
a light guide plate disposed at a rear of the display panel and configured to transmit light radiated from the light source unit to a rear side of the display panel,
wherein the light guide plate comprises:
a first pattern part comprising a plurality of first pattern lines formed on a lower surface of the light guide plate and which extend perpendicularly to a transmission direction of the radiated light from the light source unit, and which totally reflect the radiated light to an upper surface of the light guide plate, and
a second pattern part comprising a plurality of second pattern lines formed on the upper surface of the light guide plate and which extend parallel with the transmission direction of the radiated light from the light source unit, and which guide light transmitted in the light guide plate to travel along and exit from the second pattern lines.

2. The backlight unit of claim 1, wherein the plurality of first pattern lines in the lower surface have a cross-section of a wedge shape, prism shape or triangular prism shape.

3. The backlight unit of claim 2, wherein, on the cross-section of the plurality of first pattern lines, vertices of the plurality of first pattern lines, which face the upper surface of the light guide plate, has an angle from 70 to 110 degrees.

4. The backlight unit of claim 2 or 3, wherein a pitch distance between vertices of two neighboring first pattern lines of the plurality of first pattern lines is less than 0.5 mm.

5. The backlight unit of any one of the preceding claims, wherein a main angle of light reflected by the plurality of first pattern lines and which exits from the light guide plate is in a range from -10 to 10 degrees based on a normal axis with respect to the rear side of the display panel.

6. The backlight unit of any one of the preceding claims, wherein the plurality of first pattern lines formed on the lower surface of the light guide plate are more densely distributed as distance from the light source unit increases.

7. The backlight unit of any one of the preceding claims wherein a spacing between the first pattern lines is less than 0.5mm.

8. The backlight unit of any one of the preceding claims wherein the lower surface of the light guide plate is substantially planar between the first pattern lines.

9. The backlight unit of any one of the preceding claims, wherein the plurality of second pattern lines have a lenticular shape on the upper surface of the light guide plate.

10. The backlight unit of claim 8 or 9, wherein a single second pattern line of the plurality of second pattern lines has a width of 100 µm or less, and a ratio of height to width of 0.35 or higher.

11. The backlight unit of any one of the preceding claims, wherein the light source unit comprises a plurality of light emitting elements sequentially disposed, and the second pattern lines are disposed corresponding to the plurality of light emitting elements, such that a corresponding one of the second pattern lines guides an exit of light radiated from a corresponding light emitting element.

12. The backlight unit of claim 11, wherein the corresponding one of the plurality of second pattern lines substantially blocks light radiated from the plurality of light emitting elements other than the corresponding light emitting element from entering the corresponding one of the plurality of second pattern lines to a preset level or less.

13. The backlight unit of any one of the preceding claims wherein the light emitting elements comprise a plurality of independently operable light emitting elements, each aligned with one or more second pattern lines.

14. The backlight unit of any one of the preceding claims, further comprising a diffusion sheet disposed between the display panel and the upper surface of the light guide plate and which scatters light exiting from the upper surface of the light guide plate.

15. A display apparatus comprising:
a display panel; and
the backlight unit according to anyone of claims 1 to 11 which provides light to the display panel.
